# EUROPEAN PATENT SPECIFICATION

(11) **EP 0 675 155 B1**
(45) Date of publication and mention of the grant of the patent: **12.06.2002**
(21) Application number: 95301870.2
(22) Date of filing: 21.03.1995
(51) Int. Cl.: C08J 5/24, C08J 5/06

(54) **Woven carbon fiber fabric prepreg precursor, prepreg and processes for producing them**
Prepreg-Pröcursor aus kohlenfasergeweben Prepregs und Verfahren zu deren Herstellung
Précurseur de prepregné à base de tissu tissé de fibres de carbon, prepreg et leur procédé de production

(30) Priority: 31.03.1994 JP 6315194
(43) Date of publication of application: 04.10.1995
(73) Proprietor: TORAY INDUSTRIES, INC., Tokyo 103-8666 (JP)
(72) Inventor: Muraki, Tishio, Matsuyama-shi, Ehime-ken (JP); Tokunou, Masazumi, Iyo-gun, Ehime-ken (JP); Sawaoka, Ryuji, Iyo-gun, Ehime-ken (JP); Hayashi, Masahiko, Iyo-shi, Ehime-ken (JP); Higashi, Toshiaki, Onsen-gun, Ehime-ken (JP); Tazaki, Tokuo, Matsuyama-shi, Ehime-ken (JP)
(74) Representative: Coleiro, Raymond

(56) References cited:
- EP-A- 0 368 412
- WO-A-94/26492
- DATABASE WPI Derwent Publications Ltd., London, GB; AN 87-012626[02] & JP-A-61 272 242 (TORAY IND. KK) 2 December 1986
- DATABASE WPI Derwent Publications Ltd., London, GB; AN 93-261300[33] & JP-A-5 177 779 (MITSUBISHI RAYON CO. LTD.) 20 July 1993
- DATABASE WPI Derwent Publications Ltd., London, GB; AN 88-158824[23] & JP-A-63 099 910 (HITACHI CHEM. CO. LTD.) 2 May 1988
- DATABASE WPI Derwent Publications Ltd., London, GB; AN 92-379024[46] & JP-A-4 281 037 (TORAY IND. INC.) 6 October 1992

## Description

The present invention relates to a process for preparing a prepreg containing a woven carbon fiber fabric, which process includes the preparation of a precursor for the prepreg.

Since composite materials produced from prepregs consisting of carbon fibers and a matrix resin have especially excellent mechanical properties, they are widely used in the fields of sport such as in golf clubs, tennis rackets, fishing rods, etc., and of aircraft production, etc. such as in structural materials.

The reinforcing fibers used for carbon fiber reinforced composite materials are usually in the form of woven fabrics, these being excellent in formability and in the mechanical properties of the products prepared using them. Such a composite material can be produced by overlapping a plurality of prepreg sheets used as an intermediate material, and heating and hardening the matrix resin for composite material formation. In this case, to keep the formed product void-less and compact with the prepreg sheets laminated in such a way as to keep the carbon fibers in a desired direction, the prepreg used must have moderate tackiness and drapability to assure good handling convenience.

A woven carbon fiber fabric is usually composed of warp and weft threads which are respectively crimped in the thickness direction of the woven fabric. When the woven carbon fiber fabric is impregnated with a matrix resin, to make a prepreg, the impregnation pressure flattens the fabric, and hence immediately after the production of the prepreg, a resin layer is formed on the surface. The viscosity of the resin makes the prepreg moderately tacky. However, the crimped warp or weft threads spring back due to their force to restore their original shape, and as a result, the resin on the surface of the prepreg is liable to settle inside the woven fabric. Therefore, if the prepreg is allowed to stand at room temperature, the amount of resin on the surface of the prepreg decreases, to lower the tackiness of the prepreg. Moreover, if sheets of the prepreg are laminated and formed, the formed product is partially lacking in resin on its surface, and so loses smoothness.

As a conventional method for stabilizing the structural form of a woven carbon fiber fabric, for example as described in JP-A-86-034244 and JP-A-61-272242, the intersections of warp and weft threads can be bonded by copolymer nylon. This method is effective for securing the meshes of the weave and preventing the woven threads from being frayed in the carbon fiber woven fabric, but cannot keep the prepreg tacky for a long time.

WO-A-94/26492, acknowledged under Art 54(3)EPC, discloses the use of a partially cured thermosetting resin, capable also of behaving as a thermoplastic resin as a tackifier in a prepreg.

The present invention seeks to provide a process for preparing a prepreg which includes, as an intermediate step, preparation of a prepreg precursor comprising a woven carbon fiber fabric excellent in structural form stability, with the crimped threads being prevented from springing back.

The present invention also seeks to provide a process for preparing a prepreg excellent in structural form stability and tackiness stability and suitable for producing a fiber reinforced composite material excellent in surface smoothness.

Accordingly, the present invention provides a process for preparing a prepreg, which process comprises:
(a) applying, to a fabric woven from carbon fibre, an organic solvent solution or an aqueous emulsion of a mixture of an epoxy resin and a low temperature hardener capable of hardening the epoxy resin in the said mixture at a temperature up to 120°C;
(b) removing the solvent or water;
(c) allowing, or causing, by an optional heat treatment, the epoxy resin, to harden to provide, on the woven fabric, from 0.5 to 10 wt%, based on the weight of fibrous material of the fabric, of a stabilizer material; and
(d) impregnating the woven fabric carrying the stabilizer material with an epoxy resin composition.

The product of step (c) is a prepreg precursor containing a hardened stabilizer material which is thereby capable of rendering stable the structural form of the fabric of the prepreg precursor by promoting adhesion between the threads at the said points of intersection.

The precursor is thus capable of impregnation with a matrix resin to form a prepreg in which the fabric is flattened in the thickness direction and retains its flattened condition.

A fiber reinforced composite material may comprise at least one prepreg prepared as described above, which has been hardened.

Preferred embodiments of the present invention will now be described in more detail.

The woven carbon fiber fabric used in embodiments of the present invention may be obtained by weaving carbon fiber bundles, and can be any conventional two-dimensional woven fabric. It is preferable that the weave is a biaxial woven fabric in which warp and weft threads are crossed at right angles according to a predetermined manner, such as in a plain weave or stain weave. Furthermore, the woven fabric preferably has a cover factor of 90 to 99.8%, more preferably 95 to 99.8%, to make the threads less crimped at the intersections of fibers and to have excellent smoothness.

The cover factor of a woven fabric in this case refers to a value measured as described below. At first, a stereoscopic microscope is used to photograph the surface of the woven fabric while irradiating, the woven fabric with light from its back side. The transmitted light pattern of the woven fabric in this case is black in the thread portions and white in the mesh portions. The quantity of light should be set at a level not causing halation. The magnification should be such that respectively 2 to 20 threads of warp and weft may be kept in the range of the image analysis performed later. The photograph is subsequently taken by a CCD (charge couple device) camera, to convert the image into digital data expressing the white and black, and the data are stored in a memory and analyzed by an image processor. With reference to the whole area S₁ and the white portion (mesh portion) area S₂, the cover factor C_{f} (%) is calculated from the following equation:${\text{C}}_{\text{f}} {\text{= [(S}}_{\text{1}} {\text{- S}}_{\text{2}} {\text{)/S}}_{\text{1}} \text{] x 100}$ A woven carbon fiber fabric of a prepreg precursor resulting from step (c) of a process embodying the present invention has, deposited on it, a stabilizer material for rendering stable the structural form of the fabric. The stabilizer material, in a preferred process embodying the present invention, not only bonds the intersections of the warp and weft threads constituting the woven fabric, but also fastens respective carbon fiber bundles of the warp and weft threads constituting the woven fabric and the positional relation between the mono-filaments constituting the carbon fiber bundles. It is preferable that the stabilizer material is deposited substantially over the whole surface of the carbon fiber woven fabric and deposited substantially over all the surfaces of the mono-filaments constituting the carbon fiber bundles. A woven carbon fiber fabric used in a process embodying the present invention may have crimped component threads which are prevented by the stabilizing material from springing back, so that the structural form of the fabric is thus stabilized by a stabilizer material having such a capability. A prepreg prepared by such a process can retain its tackiness for a long time because the matrix resin on the surface of the prepreg cannot easily settle into the woven fabric.

The stabilizer material used in a process embodying the present invention is a hardened thermosetting epoxy resin composition.

Specific epoxy resins include epoxy resins with an amine as a precursor such as tetraglycidyl diaminodiphenylmethane, triglycidyl-p-aminophenol and triglycidyl-m-aminophenol, and epoxy resins with a phenol as a precursor such as bisphenol A type epoxy resin, bisphenol F type epoxy resin, bisphenol S type epoxy resin, phenol novolak type epoxy resin and cresol novolak type epoxy resin.

The thermosetting resin compositions include mixtures consisting of a thermosetting resin composition such as an epoxy resin and a low temperature hardener. The hardener which can be used in combination with an epoxy resin can be selected, for example, from low temperature setting type amine compounds such as an aliphatic amine, xylylenediamine, piperazine or imidazole compound.

The thermosetting resin composition can also contain nitrile rubber or any thermoplastic resin described later, for adjusting the bending resistance and form stability of the woven fabric. Thus, the thermosetting resin composition may comprise at least mainly and in such a case preferably at least 50%, by weight of the total composition, of epoxy resin, hardener and solid nitrile rubber.

If the glass transition temperature of the stabilizer material is too low, the heat history may impair the structural form stability of the woven fabric when the prepreg is prepared, so the glass transition temperature should be preferably at least 70°C.

The quantity of the stabilizer material deposited on the fabric should be 0.5 to 10.0 wt%, preferably 0.5 to 5.0 wt%, more preferably 1.0 to 4.0 wt% based on the weight of fibrous material of the carbon fiber woven fabric. If the quantity deposited is less than 0.5 wt%, the woven fabric has insufficient structural form stability, while on the other hand, if more than 10 wt% is deposited, the matrix resin impregnability in the production of the prepreg is lowered, to lower the quality of the prepreg.

The quantity of the stabilizer material deposited on the carbon fiber woven fabric can be measured by the following nitric acid decomposition method or solvent extraction method.

### Nitric acid decomposition method

A woven carbon fiber fabric having a stabilizer material deposited on it is cut into a 10 cm x 10 cm piece which is weighed (W₁) and put into a 300 ml beaker. Fifty milliliters of nitric acid is poured into it, and the contents are stirred at 50°C for 15 minutes. Nitric acid is cast away carefully so as not to allow the carbon fibers to flow out. The decomposition treatment by nitric acid is repeated twice further, and the carbon fibers are washed with water. The washing is repeated until the washing water becomes neutral. The remaining carbon fibers are dried in a hot air dryer at 120°C for 30 minutes, and weighed (W₂).

### Solvent extraction method

A woven carbon fiber fabric having a stabilizer material deposited on it is cut into a 10 cm x 10 cm piece which is weighed (W₁) and put into a 300 ml beaker. One hundred milliliters of methyl ethyl ketone is added as a solvent, and the contents are stirred at room temperature for 15 minutes. The solvent is cast away carefully so as not to allow the carbon fibers to flow out. The extraction with methyl ethyl ketone is repeated once more, and subsequently methylene chloride is used as a solvent instead, to repeat twice a similar operation. The remaining carbon fibers are dried in a hot air dryer at 120°C for 30 minutes, and weighed (W₂).

In either the nitric acid decomposition method or solvent extraction method, the quantity of the stabilizer material deposited can be obtained from the following equation:${\text{Deposition (%) = {(W}}_{\text{1}} {\text{- W}}_{\text{2}} {\text{)/W}}_{\text{2}} \text{} x 100}$

The bending resistance of the carbon fiber woven fabric with a stabilizer material deposited on it affects the drapability of the prepreg obtained using the woven fabric. If the bending resistance value of the woven fabric is too large, the structural form stability of the woven fabric is poor, and the prepreg obtained using the woven fabric may be lowered in tackiness in a short time, while the woven fabric itself becomes poor in handling convenience. If the bending resistance value of the woven fabric is too small, the woven fabric becomes rigid and is lowered in drapability, and the prepreg obtained from the woven fabric may also be lowered in drapability. Thus, the bending resistance value of the woven fabric should be preferably 20 to 150 mm, and to ensure a better impregnability as a prepreg, it should be more preferably 30 to 100 mm.

The bending resistance value of a woven carbon fiber fabric is expressed as a displacement measured as described below. A 30 mm wide 200 mm long sample is cut off, so as to have the weft threads of the woven carbon fiber fabric in the longitudinal direction. The sample is set on a horizontal test bench with a 150 mm portion of it protruded into air from the end of the test bench, and held for 10 minutes, to measure the displacement at the tip of the sample.

The woven carbon fiber fabric for use in a process embodying the present invention can be produced, for example, as described below.

At first, a woven fabric with carbon multi-filaments as warp and weft threads is obtained by ordinary weaving.

The unit weight of the woven fabric can be optional, but is usually preferably in a range from 120 to 250 g/m².

It is preferable that the woven fabric is subjected to the following opening treatment, since the cover factor of the woven fabric can be kept in a preferred range of from 90.0 to 99.8%, more preferably from 95.0 to 99.8%.

At first, to prevent the weft threads of the woven carbon fiber fabric from being frayed or to effectively perform the opening treatment for obtaining a woven fabric less bowed-filled with weft threads (i.e. to minimize bowing of the weft threads), the weft threads include curbing threads providing borderings at both the ends of the woven fabric. The number of curbing threads can be one each on both sides as far as the weft threads can be curbed, but preferably it is recommended to curb the weft threads using respective two curbing threads in pairs as in a plain weave or leno weave. If the number of curbing threads used for the ends of the woven fabric is too large, the very strong curbing at both the ends does not allow sufficient opening or widening when the woven fabric is treated to be opened, and as a result, the woven fabric is differently opened and widened between the end portions and the central portion (i.e. in a region other than at both ends). Furthermore, in the process of opening treatment, the woven carbon fiber fabric is elongated more at the central portion than at both the ends, causing the woven fabric to be bowed-filled with weft threads. Thus, if the number of curbing threads is 10 or less at each end, the opening treatment described later can be performed effectively.

Subsequently the woven carbon fiber fabric is treated to open it. Preferably it is recommended to let the woven carbon fiber fabric travel continuously in the warp direction, while letting a plurality of nozzles arranged as a row in the weft direction of the woven fabric eject water jet for opening treatment. The water deposited in the woven fabric treated to be opened by the water jet is removed by drying. The dryer used for removing the water from the carbon fibers in this case is not especially limited, and can be any of a horizontal type, vertical type, hot air circulation type and infrared ray heating type. However, if the woven fabric is tensioned more than necessary during drying, elongation may occur between the ends and the central portion of the woven carbon fiber fabric. Thus, as a drying method to prevent the woven fabric from being tensioned more than necessary, it is preferably recommended to use a belt conveyor type dryer.

A stabilizer material for stabilizing the structural form of the fabric is fed to the woven carbon fiber fabric thus obtained.

As one method for applying a stabilizer material to the woven carbon fiber fabric, the fabric is immersed in an organic solvent solution with a stabilizer material dissolved in it, and the solvent is removed. For example, the woven fabric is immersed in a solution with an epoxy resin and a hardener dissolved in a solvent such as methyl ethyl ketone or acetone, and the solvent is then removed at room temperature or with heating, and the fabric is further heated to harden the epoxy resin by the hardener.

As a further method for applying the stabilizer material, the woven fabric can be treated with a mixture consisting of an epoxy resin water emulsion and a hardener, after which the water is removed and if required, the fabric may then be heat-treated. In this method, it is preferable to add an emulsifier such as polyvinyl alcohol to the water, to provide a highly stable emulsion.

The quantity of the stabilizer material deposited can be controlled by adjusting the concentration of the solution or emulsion, or adjusting the quantity of the solution or emulsion picked up by the woven fabric immersed in the solution or emulsion, using a squeezing roll, etc.

Furthermore, the bending resistance of the woven fabric can be adjusted to within a preferred range as previously described by selecting the stabilizer material used, the quantity of it deposited etc.

The precursor prepreg, resulting from step (c) of a process embodying the present invention, comprising the treated woven carbon fiber fabric may then be converted by step (d) into a prepreg in which an epoxy resin composition with an epoxy resin and a hardener as essential components acts as a matrix.

The epoxy resin used in step (d) for preparing a prepreg in a process embodying the present invention is not especially limited, and may preferably be selected from epoxy resins derived from an amine or phenol, etc. as a precursor.

Specifically, epoxy resins derived from an amine as a precursor include tetraglycidyl diaminodiphenylmethane, triglycidyl-p-aminophenol, triglycidyl-m-aminophenol and triglycidyl aminocresol. Tetraglycidyl diaminodiphenylmethane can be especially preferably used since the hardened material obtained can be excellent in heat resistance.

Epoxy resins derived from a phenol as a precursor include bisphenol A type epoxy resin, bisphenol F type epoxy resin, bisphenol S type epoxy resin, phenol novolak type epoxy resin, cresol novolak type epoxy resin and resorcinol type epoxy resin. In particular, since liquid bisphenol A type epoxy resin and bisphenol F type epoxy resin are low in viscosity, they can be preferably used with another epoxy resin or additive, to adjust the tackiness and viscosity of the epoxy resin composition.

Furthermore, these epoxy resins can be used singly or in any suitable combination. A mixture consisting of a glycidyl amine type epoxy resin and a glycidyl ether type epoxy resin can be preferably used since it makes the prepreg tacky and drapable and the hardened material resistant against heat.

The hardener used in combination with the epoxy resin is not especially limited and can be selected from generally used hardeners for epoxy resins, for example, dicyandiamide, diaminodiphenylsulfone, aminobenzoates and various acid anhydrides. Dicyandiamide is preferably used since it provides a prepreg having excellent storage stability. If an aromatic diamine such as diaminodiphenylsulfone is used as the hardener, the hardened epoxy resin obtained has good heat resistance. It is also possible to use a urea compound, boron trifluoride amine salt or imidazole compound, etc. alone or in combination with any of the above hardeners.

The epoxy resin composition consisting of an epoxy resin and a hardener can contain a high polymer, for example, a thermoplastics resin such as polyether sulfone, polyether imide or polyvinyl formal, or nitrile rubber, when used. The high polymer added can enhance the toughness of the hardened material. Furthermore, enhancing the viscosity of the resin is effective to control the settlement of the resin on the surface of the prepreg. Among the above high polymers, highly flexible solid nitrile rubber can be preferably used since it provides a resin high in viscosity without impairing the tackiness of the matrix resin itself. In particular a preferred epoxy resin matrix composition comprises at least mainly, more preferably at least 50%, by weight of the total composition of epoxy resin, hardener and solid nitrile rubber.

Moreover, in a prepreg prepared by a process embodying the invention, in which each of the stabilizer material and the matrix is an epoxy resin composition containing a hardener for the epoxy resin, the total composition comprising epoxy resin and hardener preferably comprises at least mainly, more preferably at least 50%, by weight of the total composition, of epoxy resin, hardener and solid nitrile rubber.

The quantity of stabilizer material deposited on the woven carbon fiber fabric in the prepreg can be measured by firstly extracting and removing from the prepreg the epoxy resin using methyl ethyl ketone and thereafter determining the amount of stabilizer present on the remaining fabric using the method previously described for measuring the quantity of the stabilizer material deposited on the woven carbon fiber fabric.

The bending resistance value of the prepreg should be preferably 50 to 150 mm, more preferably 70 to 120 mm, because if it is too small, the prepreg may not be flexible and because if it is too large, the prepreg is so soft as to make handling of the prepreg less convenient.

The bending resistance of the prepreg can be measured in the same manner as that adopted for measuring the bending resistance of the woven fabric, namely by cutting off a 30 mm wide 200 mm long sample from the prepreg with the weft threads of the component woven fabric kept in a longitudinal direction, setting the sample on a horizontal test bench with a 150 mm portion of it protruding into air from the tip of the test bench, holding for 10 minutes, and measuring the displacement at the tip of the sample.

The prepreg preferably has a cover factor of at least 95%, more preferably at least 97%, to prevent the resin on the surface from settling, for maintaining tackiness for a long time and to keep the surface of the molded product smooth. The cover factor of the prepreg can be measured in the same manner as that adopted for measuring the cover factor of the woven fabric.

In a process embodying the invention, in which a prepreg is obtained from a precursor obtained in step (c) by application of step (d), step (d) may be carried out by a conventional hot melt method to impregnate the woven fabric with the matrix resin under heating and pressurization or a conventional wet method to impregnate the woven fabric with the matrix resin using a solution of the resin dissolved in an organic solvent, except that the woven fabric is a woven carbon fiber fabric carrying a stabilizer material for stabilizing the structural form of the fabric.

The low temperature type epoxy resin hardener means a hardener which hardens the epoxy resin at a temperature up to 120°C, which is a temperature lower then the hardener contained in the epoxy resin composition used as the matrix, which matrix preferably hardens at a temperature of at least 150°C, more preferably at least 170°C. If a hardener which hardens the epoxy resin at a high temperature is used, it is necessary to heat at a temperature higher or for a time longer than that ordinarily required for producing the prepreg, in order to harden the matrix resin near the woven fabric. As a result, the hardener contained in the matrix also simultaneously hardens the entire epoxy resin composition used as the matrix, to impair the drapability of the prepreg.

The low temperature type hardener may be a hardener which hardens the epoxy resin at a temperature of from 0 to about 120°C inclusive, preferably, at a temperature of from room temperature (about 20°C) to about 100°C, more preferably to a temperature lower than 100°C, especially about 90°C, and can be typically selected from aliphatic amines such as hexamethylenediamine and diethylenetriamine, xylylenediamine, piperazine and imidazole compounds. The quantity of the low temperature type hardener based on the weight of fibrous material of the woven carbon fiber fabric depends on the hardener used and desired performance of the prepreg, but is usually about 0.1 to 1 wt%.

Sheets of the prepreg precursor obtained by step (c) in a process embodying the present invention can be laminated with epoxy resin in step (c) and hardened, preferably at a temperature of at least 150°C up to about 200°C, more preferably at least 170°C up to about 190°C to form a fiber reinforced composite material excellent in surface smoothness.

Especially preferred embodiments of the present invention are now described in more detail with reference to the following Examples.

In the Examples, all parts are by weight unless otherwise stated and the quantity of the sizing material deposited was measured by the solvent extraction method, in the same manner as that adopted for measuring the quantity of the stabilizer material deposited, except that the extraction by methylene chloride was not effected.

### Example 1

Nineteen parts of "Epikote" (registered trade mark) 828 produced by Yuka Shell Epoxy K.K. were added to 1200 parts of an aqueous solution containing 2% of polyvinyl alcohol with a saponification degree of 90%, and the mixture was stirred by a homo-mixer, to prepare an epoxy resin emulsion. To the aqueous emulsion, 4.3 parts of piperazine were added as a hardener, to be dissolved. A plain weave fabric C07373Z of carbon fibers, "Torayca" (registered trade mark) T300 produced by Toray Industries, Inc. (the woven fabric had a cover factor of 91.0% and had deposited on it 1.2wt%, by weight of fabric, of sizing material) was immersed into the above aqueous emulsion containing the hardener in solution, and heat-treated at 150°C for 10 minutes using a hot air dryer, to remove water and to harden the epoxy resin, thereby applying to the woven carbon fiber fabric a stabilizer material for stabilizing the structural form of the fabric. The woven fabric obtained had a cover factor of 94.0% and a bending resistance value of 80 mm. The quantity of the deposited stabilizer material measured by the nitric acid decomposition method was found to be 2.1 wt%, by weight of the fibrous material of the fabric alone. A material obtained by mixing "Epikote 828" and piperazine at the above ratio and heat-treating at 150°C for 10 minutes had a glass transition temperature of 95°C.

Forty parts of tetraglycidyl diaminodiphenylmethane (ELM434 produced by Sumitomo Chemical Co., Ltd.), 20 parts of bisphenol F type epoxy (Epc830 produced by Dainippon Ink & Chemicals, Inc.), 63 parts of brominated bisphenol A type epoxy (Epc152 produced by Dainippon Ink & Chemicals, Inc.), 127 parts of bisphenol A type epoxy (Ep828 produced by Yuka Shell Epoxy K.K.), 80 parts of 4,4'-diaminodiphenylsulfone and 25 parts of solid nitrile rubber ("Nippole" (registered trade mark) 1072 produced by Nippon Zeon Co., Ltd.) were kneaded by a kneader, to prepare an epoxy resin composition for a prepreg. The composition was applied onto releasing paper heated at 80°C, to prepare a resin film. The resin film was laminated on both sides of the above woven fabric, and a prepreg apparatus was used to impregnate the woven fabric with the resin at 100°C at an impregnation pressure of 4 kgf/cm². The prepreg obtained had a cover factor of 95.4%, a bending resistance value of 120 mm and a carbon fiber content of 60 wt%, by weight of total prepreg.

The prepreg had moderate drapability and tackiness. The prepreg was allowed to stand in an atmosphere of 25°C and 40% RH for 10 days, and still had moderate drapability and tackiness.

### Example 2

A plain weave carbon fiber fabric (103 cm in width) woven with Torayca (registered trade mark; produced by Toray Industries, Inc.) T300-3K (consisting of 3,000 filaments with 1.2 wt% of sizing material deposited on it) as weft and warp threads and with 193 g/m² of carbon fibers was curbed at both the ends in the width direction each by four glass fiber yarns ECD 450 1/2 4.4S (0.08 mm in outer diameter) produced by Nitto Boseki Co., Ltd. woven in a range of 7 to 10 mm inside from the ends of the woven fabric. In this case, every two glass fiber yarns formed a pair in leno weave. The woven carbon fiber fabric was opened at a water jet pressure of 5.0 kgf/cm² at a water temperature of 35°C by water jet punching, and dried at 140°C for 3 minutes using a horizontal hot air dryer. The quantity of sizing material deposited in the woven fabric after drying was 0.7 wt% by weight of fabric.

The woven carbon fiber fabric thus obtained was fed with a stabilizer material as in Example 1.

The woven carbon fiber fabric obtained contained 2.1% by weight of fibrous material of the fabric of the stabilizer material and had a cover factor of 98.0% and a bending resistance value of 75 mm.

The same epoxy resin film as that used in Example 1 was used for lamination on both sides of the woven fabric, and a prepreg apparatus was used for impregnation at 100°C at an impregnation pressure of 4 kgf/cm². The prepreg obtained had a carbon fiber content 58 wt% of weight of total prepreg, a bending resistance value of 110 mm and a cover factor of 99.2%.

The prepreg had moderate drapability and tackiness. The prepreg was allowed to stand in an atmosphere of 25°C and 40% RH for 10 days, and still had moderate drapability and tackiness.

## Claims

1. A process for preparing a prepreg, which process comprises
applying, to a fabric woven from carbon fibre, an organic solvent solution or an aqueous emulsion of a mixture of an epoxy resin and a low temperature hardener capable of hardening the epoxy resin in the said mixture at a temperature up to 120°C;
removing the solvent or water;
allowing, or causing, by an optional heat treatment, the epoxy resin, to harden to provide, on the woven fabric, from 0.5 to 10 wt%, based on the weight of fibrous material of the fabric, of a stabilizer material; and
impregnating the woven fabric carrying the stabilizer material with an epoxy resin composition.

2. A process according to claim 1, wherein the low temperature hardener is capable of hardening the epoxy resin of the said mixture at a temperature of from 0 to 90°C.

3. A process according to claim 1 or claim 2, wherein the organic solvent solution or aqueous emulsion of the said mixture is applied by passing the woven fabric therethrough and thereafter between squeezing rollers.

4. A process according to any preceding claim, which includes the preliminary step of opening the woven fabric by water jet punching before applying to it the stabilizer material.

5. A process according to any preceding claim, wherein the stabilizer material has a glass transition temperature of at least 70°C.

6. A process according to any preceding claim, wherein at least 50% by weight of the epoxy resin composition impregnated into the woven fabric carrying the stabilizer material is composed of an epoxy resin, hardener and solid nitrile rubber.

7. A process according to any preceding claim, wherein the prepreg has a bending resistance value of 50 to 150 mm.

8. A process according to any preceding claim, wherein the prepreg has a cover factor of at least 95%.

## Patentansprüche

1. Verfahren zur Herstellung eines Prepregs, wobei das Verfahren Folgendes umfasst:
das Auftragen einer Lösung in organischem Lösungsmittel oder einer wässrigen Emulsion eines Gemischs aus einem Epoxyharz und einem Niedertemperatur-Härter, der das Epoxyharz im Gemisch bei einer Temperatur von bis zu 120 °C härten kann, auf einen Webstoff aus Kohlefasern;
das Entfernen des Lösungsmittels oder Wassers;
das Ermöglichen oder Bewirken durch eine fakultative Wärmebehandlung des Härtens des Epoxyharzes, um auf dem Webstoff 0,5 bis 10 Gew.-% eines Stabilisatormaterials, bezogen auf das Gewicht des Fasermaterials des Webstoffs, bereitzustellen; und
das Imprägnieren des Webstoffs, der das Stabilisatormaterial trägt, mit einer Epoxyharzzusammensetzung.

2. Verfahren nach Anspruch 1, worin der Niedertemperatur-Härter das Epoxyharz des Gemisches bei einer Temperatur von 0 bis 90 °C härten kann.

3. Verfahren nach Anspruch 1 oder 2, worin die Lösung in organischem Lösungsmittel oder die wässrige Emulsion des Gemisches aufgetragen wird, indem der Webstoff durch sie hindurch und daraufhin zwischen Abquetschwalzen hindurch geführt wird.

4. Verfahren nach einem der vorangegangenen Ansprüche, das den vorhergehenden Schritt des Öffnens des Webstoffs durch Wasserstrahl-Perforation umfasst, bevor das Stabilisatormaterial darauf aufgetragen wird.

5. Verfahren nach einem der vorangegangenen Ansprüche, worin das Stabilisatormaterial eine Glastemperatur von zumindest 70 °C aufweist.

6. Verfahren nach einem der vorangegangenen Ansprüche, worin zumindest 50 Gew.-% der Epoxyharzzusammensetzung, mit der der Webstoff imprägniert ist, der das Stabilisatormaterial trägt, aus einem Epoxyharz, Härter und festem Nitrilkautschuk bestehen.

7. Verfahren nach einem der vorangegangenen Ansprüche, worin das Prepreg einen Biegewiderstandswert von 50 bis 150 mm aufweist.

8. Verfahren nach einem der vorangegangenen Ansprüche, worin das Prepreg einen Bedeckungsfaktor von zumindest 95 % aufweist.

## Revendications

1. Procédé de préparation d'un prépreg, lequel procédé consiste à
appliquer, à une étoffe tissée d'une fibre de carbone, une solution dans un solvant organique ou une émulsion aqueuse d'un mélange d'une résine époxy et d'un durcisseur à basse température capable de durcir la résine époxy dans ledit mélange à une température jusqu'à 120°C;
enlever le solvant ou l'eau;
laisser, ou forcer, par un traitement thermique facultatif, la résine époxy durcir pour produire sur l'étoffe tissée de 0,5 à 10% en poids, en se basant sur le poids de la matière fibreuse de l'étoffe, d'une matière du stabilisant; et
imprégner l'étoffe tissée portant la matière du stabilisant d'une composition de résine époxy.

2. Procédé selon la revendication 1 où le durcisseur à basse température est capable de durcir la résine époxy dudit mélange à une température de 0 à 90°C.

3. Procédé selon la revendication 1 ou la revendication 2, où la solution dans le solvant organique ou l'émulsion aqueuse dudit mélange est appliquée par passage de l'étoffe tissée à travers elle et ensuite entre des rouleaux compresseurs.

4. Procédé selon toute revendication précédente qui comprend l'étape préliminaire d'ouvrir l'étoffe tissée par perforation au jet d'eau avant d'y appliquer la matière du stabilisant.

5. Procédé selon toute revendication précédente où la matière du stabilisant a une température de transition vitreuse d'au moins 70°C.

6. Procédé selon toute revendication précédente où au moins 50% en poids de la composition de résine époxy imprégnée dans l'étoffe tissée portant la matière du stabilisant se compose d'une résine époxy, d'un durcisseur et d'un caoutchouc nitrile solide.

7. Procédé selon toute revendication précédente où le prépreg a une valeur de résistance à la flexion de 50 à 150 mm.

8. Procédé selon toute revendication précédente où le prépreg a un facteur de recouvrement d'au moins 95%.
